# DEMANDE DE BREVET EUROPEEN

(11) **EP 2 241 464 A1**
(43) Date de publication de la demande: **20.10.2010**
(21) Numéro de dépôt: 10159641.9
(22) Date de dépôt: 12.04.2010
(51) Int. Cl.: B60J 1/20, B60J 3/02

(54) **Pare-soleil extensible à glissière pour véhicule automobile**

(30) Priorité: 17.04.2009 FR 0952523
(71) Demandeur: Peugeot Citroën Automobiles SA, 78140 Vélizy-Villacoublay (FR)
(72) Inventeur: Sevetier, André, 75016, PARIS (FR)

(57) **Abrégé**

Ce pare-soleil (6) comprend un rideau extensible (10) comprenant une toile (16) d'occultation et une partie rigide (22) solidaire d'une extrémité (24) de la toile d'occultation, un enrouleur (18) pour enrouler la toile d'occultation, et au moins une pièce (30) de guidage en translation de ladite partie rigide (22) suivant une direction d'extension (Y-Y) entre une position proche de l'enrouleur (18) correspondant à une configuration rétractée du pare-soleil (6) et une position éloignée de l'enrouleur (18) correspondant à une configuration déployée du pare-soleil (6). Ladite pièce de guidage (30) est montée mobile en rotation entre une position rétractée et une position déployée et présente une surface de suiveur de came (40) agencée pour coopérer avec une surface de came (42) prévue sur la partie rigide (22) du rideau (10) pour déplacer ainsi la pièce de guidage (30 ; 64) de la position rétractée jusqu'à la position déployée.

## Description

La présente invention concerne un pare-soleil extensible de véhicule automobile, du type comprenant :
- au moins une pièce de support ;
- un rideau extensible comprenant une toile d'occultation et une partie rigide solidaire d'une extrémité de la toile d'occultation ;
- un enrouleur pour enrouler la toile d'occultation, l'enrouleur étant monté sur la pièce de support ;
- au moins une pièce de guidage en translation de ladite partie rigide suivant une direction d'extension entre une position proche de l'enrouleur correspondant à une configuration rétractée du pare-soleil, une position éloignée de l'enrouleur correspondant à une configuration déployée du pare-soleil, et une pluralité de positions intermédiaires.

Il existe dans certains véhicules, des pare-soleil formés par un rideau extensible. Le rideau comprend une toile d'occultation enroulée sur un enrouleur et une barre de tirage solidaire de l'extrémité libre de la toile. La barre de tirage est guidée en translation le long du pare-brise du véhicule.

Néanmoins, ce type de pare-soleil, s'il est par exemple adapté pour des véhicules ayant un pare-brise de grandes dimensions, comme par exemple des autocars, des bus, ne convient pas dans une automobile notamment, pour des raisons esthétiques.

Un but de l'invention est de fournir un pare-soleil extensible de véhicule automobile qui soit esthétique.

A cet effet, l'invention a pour objet un pare-soleil du type précité, **caractérisé en ce que** ladite pièce de guidage est montée mobile en rotation par rapport à la pièce de support entre une position rétractée, correspondant à la configuration rétractée du pare-soleil, et une position déployée correspondant à la configuration déployée du pare-soleil, ladite pièce de guidage présentant une surface de suiveur de came agencée pour coopérer avec une surface de came prévue sur la partie rigide du rideau et pour déplacer ainsi la pièce de guidage de la position rétractée vers et jusqu'à la position déployée par déplacement de la partie rigide du rideau de ladite position proche vers et jusqu'à ladite position éloignée de l'enrouleur.

Suivant des modes particuliers de réalisation, l'invention comporte une ou plusieurs des caractéristiques suivantes, prise(s) isolément ou suivant toutes les combinaisons techniquement possibles :
- le pare-soleil extensible comprend des moyens de sollicitation élastique de la pièce de guidage de la position déployée vers et jusqu'à la position rétractée ;
- la pièce de guidage est une glissière à l'intérieur de laquelle coulisse la partie rigide ;
- la pièce de guidage est une barre autour de laquelle coulisse la partie rigide ;
- la barre présente une fente de réception de la toile d'occultation ;
- la surface de came de la partie rigide est formée par le bord d'extrémité libre de la partie rigide ;
- la surface de came et la surface de suiveur de came sont conformées de telle sorte que la zone de contact entre les deux surfaces soit située au niveau de l'extrémité libre de la pièce de guidage ;
- la partie rigide et la pièce de guidage présentent des reliefs complémentaires de retenue de la partie rigide dans la position éloignée et/ou dans des positions intermédiaires et/ou dans la position proche, lesdits reliefs comprenant de préférence au moins un téton de retenue pénétrant un orifice correspondant de l'autre de la partie rigide et de la pièce de guidage ;
- la pièce de guidage est montée rotative par rapport à la pièce de support autour d'un axe parallèle à l'axe de l'enrouleur pour orienter le rideau ;
- le pare-soleil comprend deux pièces de guidage agencées de chaque côté du rideau ;
- le pare-soleil comprend une broche de support de la pièce de guidage sur laquelle la pièce de guidage est montée rotative entre la position rétractée et la position déployée ;
- la broche de support est montée mobile en rotation par rapport à la pièce de support autour d'un axe parallèle à l'axe de l'enrouleur pour orienter le rideau ; et
- la broche de support est montée mobile en translation par rapport à la pièce de support suivant ladite direction parallèle à l'axe de l'enrouleur, le pare-soleil comprenant des moyens de sollicitation élastique de la broche de support vers le rideau suivant ladite direction parallèle à l'axe de l'enrouleur, le déplacement de la partie rigide vers la position éloignée déplaçant la broche de support suivant ladite direction parallèle à l'axe de l'enrouleur à l'encontre des moyens de sollicitation élastique.

L'invention a également pour objet un véhicule automobile comprenant une pièce de structure de toit et une pièce d'habillage couvrant la pièce de structure, ainsi qu'un pare-soleil, **caractérisé en ce que** le pare-soleil est tel que défini ci-dessus, la pièce de support du pare-soleil étant montée solidaire de la pièce de structure et masquée par la pièce d'habillage.

L'invention sera mieux comprise à la lecture de la description qui va suivre, donnée uniquement à titre d'exemple, et faite en se référant aux dessins annexés, sur lesquels :
- la Figure 1 est une vue schématique de l'intérieur d'un véhicule automobile muni d'un pare-soleil extensible selon l'invention ;
- la Figure 2 est une demi-vue schématique de face du pare-soleil de la Figure 1 en configuration déployée ;
- la Figure 3 est une vue analogue à la Figure 2 illustrant le pare-soleil en configuration rétractée ;
- la Figure 4 est une vue schématique en coupe suivant la ligne IV - IV de la Figure 3 ;
- la Figure 5 est une vue schématique agrandie en coupe suivant la ligne V
- V de la Figure 2 ;
- la Figure 6 est une vue agrandie d'un détail VI de la Figure 2 ;
- la Figure 7 est une vue schématique partielle en perspective illustrant la partie inférieure d'un pare-soleil extensible selon un deuxième mode de réalisation de l'invention, en configuration déployée ;
- la Figure 8 est une vue analogue du pare-soleil de la Figure 7 en configuration rétractée, pour les traits continus, et dont les traits mixtes indiquent la configuration déployée ; et
- la Figure 9 est une vue en coupe selon la ligne IX - IX de la Figure 8.

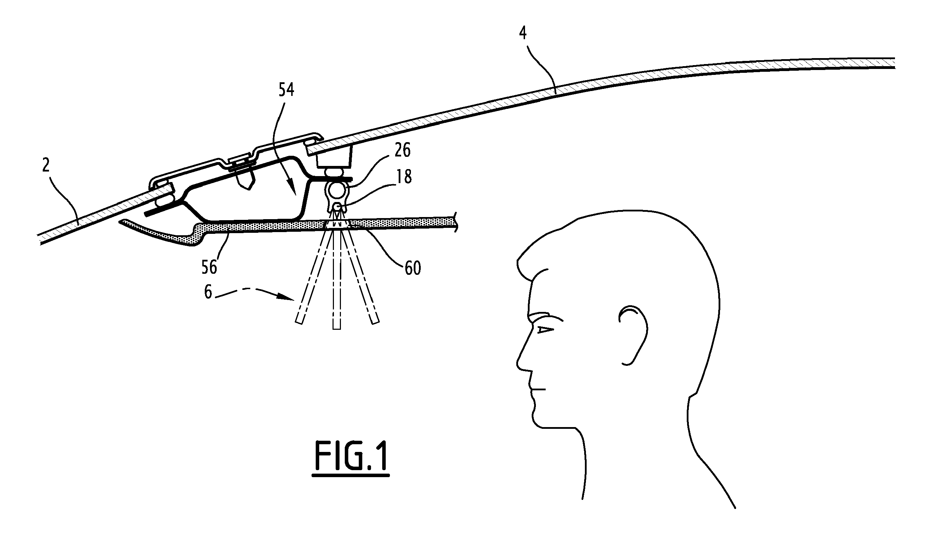

La Figure 1 illustre un véhicule automobile muni, entre le pare-brise 2 et le toit 4, d'un pare-soleil extensible 6. Le toit 4 présente par exemple la particularité d'être vitré, ce qui laisse peu de place pour le rangement d'un pare-soleil conventionnel.

Le pare-soleil selon l'invention présente la particularité d'être extensible et de ne pas nécessiter la présence de glissières montées fixes de chaque côté du pare-brise.

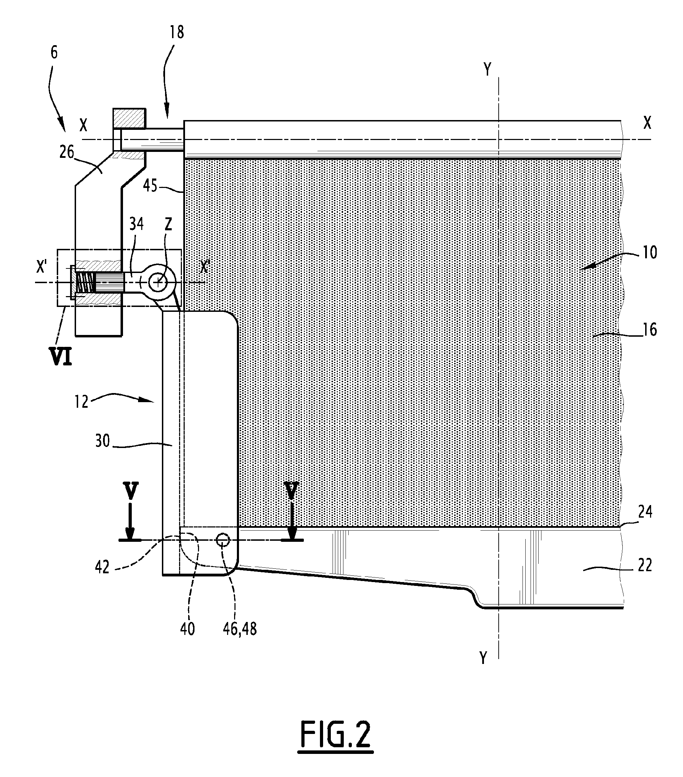

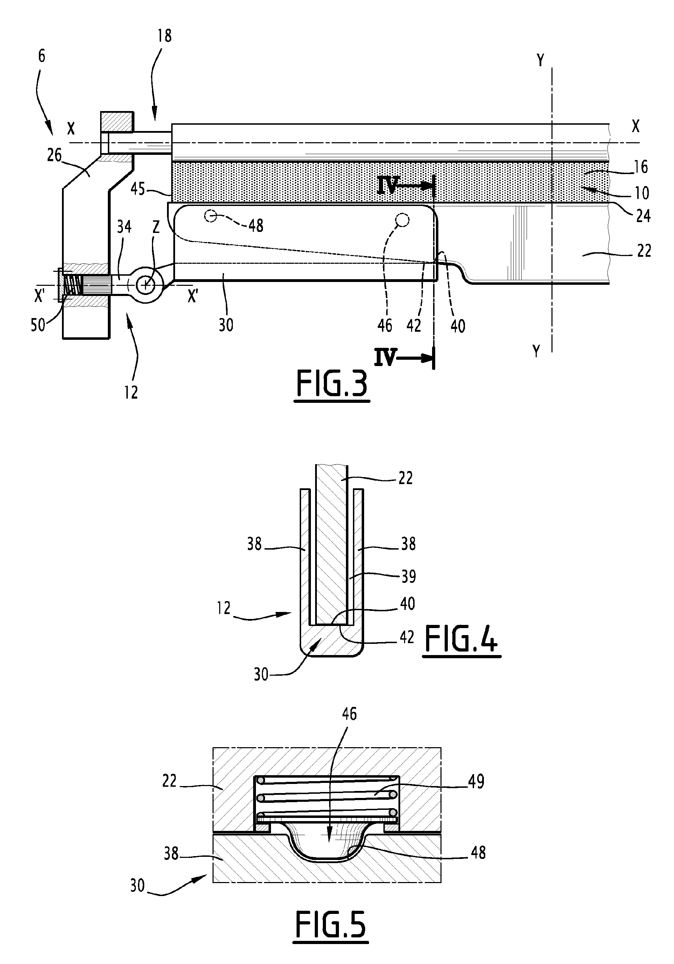

Le pare-soleil 6 est illustré plus en détail sur les Figures 2 et 3 sur lesquelles il est représenté respectivement en configuration déployée et en configuration rétractée.

Les Figures 2 et 3 ne représentent qu'une moitié du pare-soleil 6, ce dernier étant, dans cet exemple, symétrique par rapport à un plan médian. Par conséquent, seuls les éléments « gauche » du pare-soleil 6 sont visibles, les éléments « droit » étant identiques.

Le pare-soleil 6 est essentiellement composé d'un rideau 10 extensible et de moyens 12 de guidage du rideau entre les configurations rétractée et déployée.

Le rideau 10 comprend une toile 16 d'occultation s'enroulant autour d'un enrouleur 18, et une partie rigide 22 fixée à l'extrémité libre 24 de la toile 16.

L'enrouleur 18 est monté rotatif sur une pièce 26 de support autour d'un axe X-X, et sollicite la toile d'occultation 16 dans le sens de l'enroulement.

La partie rigide 22 est guidée par les moyens de guidage 12 suivant une direction d'extension Y-Y contenue dans un plan perpendiculaire à l'axe X-X de l'enrouleur 18.

L'axe X-X de l'enrouleur 18 est transversal au véhicule.

La partie rigide 22 est ainsi guidée entre une position proche de l'enrouleur 18 (figure 3) correspondant à la configuration rétractée du pare-soleil 6 et une position éloignée de l'enrouleur 18 (figure 2) correspondant à la configuration déployée du pare-soleil. Entre ces deux positions, elle passe par une pluralité de positions intermédiaires.

La partie rigide 22 a une forme générale de plaque. Elle forme une barre de tirage.

Les moyens de guidage 12 comprennent deux glissières 30 agencées de chaque côté du rideau 10 et recevant en coulissement les extrémités respectives de la partie rigide 22. Les glissières 30 sont par exemple identiques.

Chaque glissière 30 est en effet montée rotative par rapport à la pièce 26 de support respective autour d'un axe Z-Z perpendiculaire aux axes X-X et Y-Y, entre une position rétractée (figure 3) et une position déployée (figure 2). D'une manière générale, les glissières 30 sont rétractables vers l'enrouleur 18.

Le montage de chaque glissière 30 est par exemple réalisé par l'intermédiaire d'une broche 34 de support. La broche 34 est reçue dans la pièce support 26.

La glissière 30 présente, comme illustré sur la Figure 4, deux flancs 38 de guidage de la partie rigide 22 entre ladite position éloignée et ladite position proche.

La rotation de la glissière 30 accompagne le mouvement de la partie rigide 22. A cet effet, la glissière 30 présente une surface 40 de suiveur de came coopérant avec une surface 42 de came prévue sur la partie rigide 24.

La surface 40 est prévue au niveau de l'extrémité libre de la glissière 30 pour assurer un bras de levier plus important.

Pour un meilleur glissement, la surface 42 s'étend suivant un plan incliné d'au moins 5 degrés par rapport à un plan tangent à la surface 40 au niveau de la zone de contact entre les surfaces 40 et 42.

Le déplacement de la partie rigide 22 de la position proche à la position éloignée déplace ainsi la glissière 30 de la position rétractée à la position déployée.

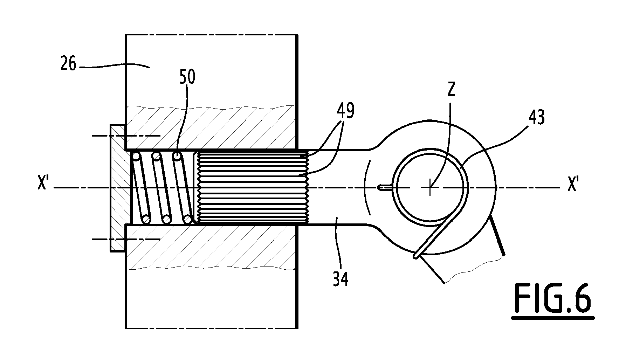

La glissière 30 est en outre sollicitée élastiquement de la position déployée vers et jusqu'à la position proche par un ressort 43 de torsion de tout type adapté (voir Figure 6).

Dans la position rétractée, la glissière 30, qui a une forme générale allongée, s'étend de façon sensiblement parallèle à l'axe X-X de l'enrouleur 18, dans le prolongement de la partie rigide 22.

La position déployée est obtenue par une rotation d'au moins 45°, par exemple d'environ 90° autour de l'axe Z-Z. Dans cette position, la glissière 30 s'étend suivant une direction sensiblement parallèle aux bords latéraux 45 de la toile 16 d'occultation.

Comme illustré plus en détail sur la Figure 5, la partie rigide 22 est munie d'un téton 46 de retenue de la partie rigide 22 dans un orifice 48 correspondant de la glissière 30 pour retenir le pare-soleil en configuration déployée. Le téton 46 est par exemple sollicité élastiquement vers l'orifice 48 par un ressort 49, comme illustré. Le téton 46 est en variante remplacé par un relief de retenue de tout type adapté.

Une pluralité de reliefs, par exemple de type tétons 46, peuvent être prévus pour retenir la partie rigide 22 dans différentes positions.

Les glissières 30 sont également montées rotatives autour d'une direction X'-X' parallèle à l'axe X-X de l'enrouleur 18, par montage rotatif de la broche 34 de support autour de la direction X'-X' dans la pièce 26 de support, comme illustré plus en détail sur la Figure 6. La direction X'-X' correspond à l'axe longitudinal de la broche 34.

Une rotation autour de la direction X'-X' permet d'orienter la partie rigide 22 du pare-soleil 6 suivant différents plans d'orientation, de même que la partie de la toile 16 d'occultation qui est guidée par la glissière 30.

La broche 34 de support est également munie de crans 49 (Figure 6) pour retenir le pare-soleil 6 dans différents plans d'orientation.

La Figure 1 illustre le pare-soleil 6 dans différentes orientations.

En outre, la broche 34 de support est, comme illustré sur les Figures 3 et 6, montée mobile en translation suivant la direction X'-X' de façon à réduire les efforts s'exerçant à l'interface entre la surface 40 de suiveur de came et la surface 42 de came. La broche 34 de support est à cet effet sollicitée élastiquement par un ressort 50.

Ainsi, le déplacement de la partie rigide 22 vers la position éloignée déplace la broche 34 de support à l'encontre du ressort 50.

Le montage du pare-soleil 6 sur le véhicule automobile est réalisé par la fixation des deux pièces de support 26 sur une pièce 54 de structure du toit du véhicule (figure 1).

La pièce 54 de structure est recouverte par une garniture 56 destinée à masquer la pièce 54 et le pare-soleil 6 en configuration rétractée. La garniture 56 présente à cet effet une fente 60 de passage du pare-soleil 6.

En configuration rétractée, seul le centre de la partie rigide 22 du rideau 10 fait saillie par rapport à la garniture 56 de telle sorte que seule la partie 22 est visible par l'utilisateur.

L'invention présente de nombreux avantages.

Grâce à la rétractabilité des glissières 30, le pare-soleil 6 est, en configuration rétractée, très discret et peu encombrant. Il en résulte un effet esthétique. En outre, le pare-soleil 6 peut être prévu sur une traverse de faible largeur entre le pare-brise 2 et le toit vitré 4.

En outre, les glissières 30 assurent un guidage fiable.

Les surfaces de came 42 et de suiveur de came 40 assurent un glissement silencieux et à faible frottement. Le montage en translation de la broche 34 renforce ces avantages, de même que l'inclinaison entre les surfaces 40 et 42.

Les tétons 46 et les crans 49 permettant de nombreuses configurations possibles du pare-soleil, de façon peu coûteuse.

Après déploiement, le pare-soleil 6 fournit une surface d'occultation importante à l'utilisateur.

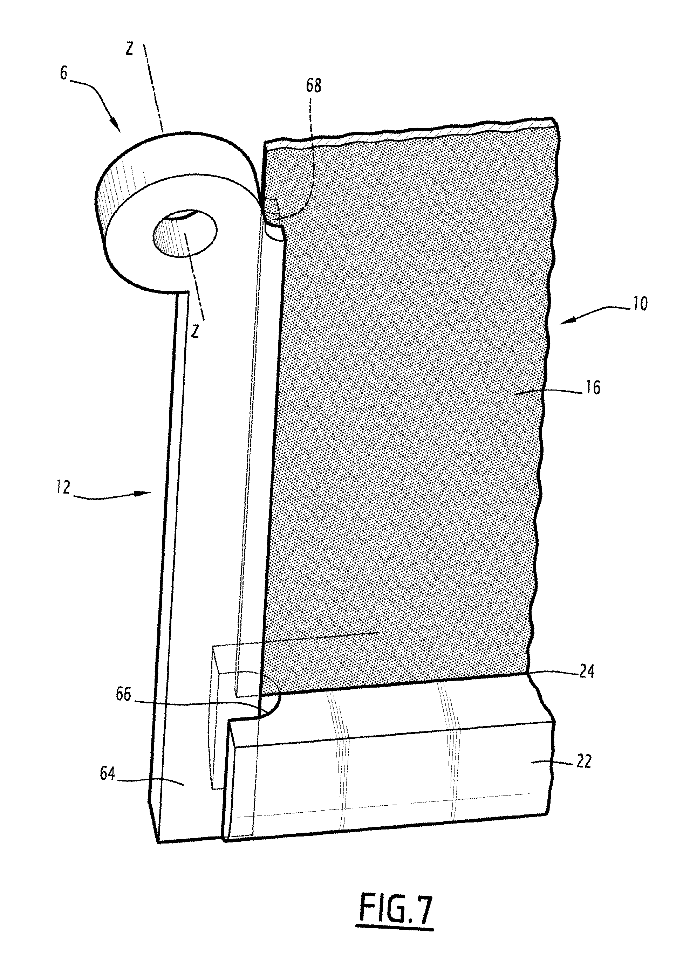

Les Figures 7 à 9 illustrent un deuxième mode de réalisation de l'invention dans lequel seules les différences par rapport au premier mode de réalisation sont décrites ci-dessous et sur lesquelles des numéros de référence identiques aux Figures 1 à 6 désignent des éléments analogues.

Le pare-soleil 6 selon le deuxième mode de réalisation de l'invention se distingue essentiellement en ce que les glissières 30 sont remplacées par des barres 64 de guidage.

Chaque barre 64 est reçue dans une fente 66 correspondante de la partie rigide 22 du rideau 10 de façon à guider la partie rigide 22 dans le plan de la barre 64.

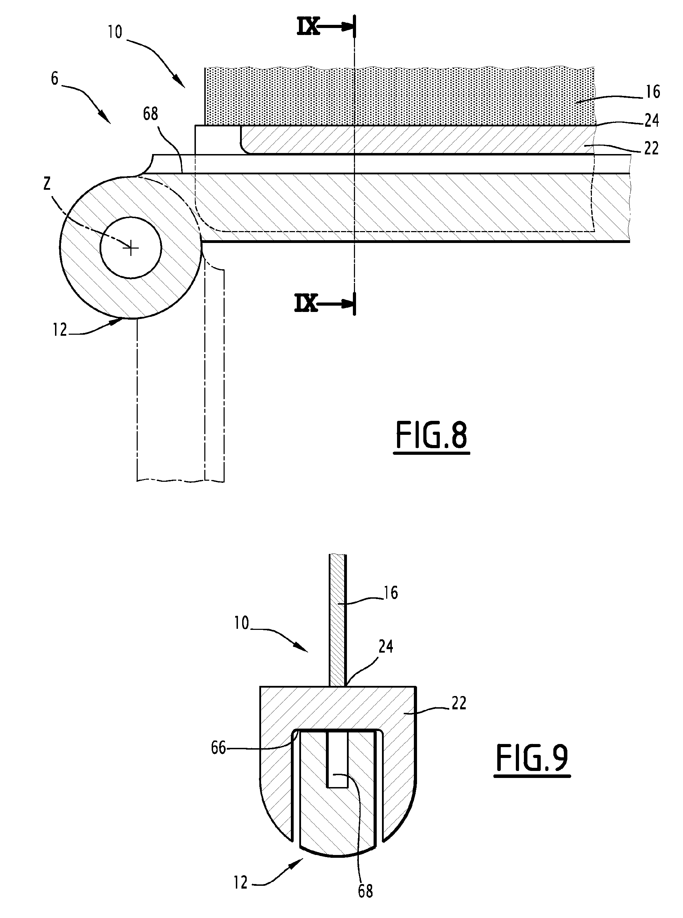

Comme illustré sur les Figures 8 et 9, ce mode de réalisation présente l'avantage de permettre de masquer, en configuration rétractée, la barre 64 dans la partie rigide 22.

Dans l'exemple illustré, les bords de la barre 64 et de la partie rigide 22 sont, en configuration rétractée, en contact sur sensiblement toute la longueur de la barre 64. Mais, en variante, les bords sont inclinés pour un contact ponctuel et éloignés de l'axe (Z-Z) de rotation de la barre 64, comme dans le premier mode de réalisation.

En outre, la barre 64 présente une fente 68 de réception de la toile 16 d'occultation, de façon à limiter l'encombrement de pare-soleil 6.

La fente 68 permet en effet de rapprocher l'axe Z-Z du bord latéral 45 de la toile 16 d'occultation et de limiter ainsi la longueur nécessaire pour la partie rigide 22.

## Revendications

1. Pare-soleil (6) extensible de véhicule automobile, du type comprenant :
- au moins une pièce (26) de support ;
- un rideau extensible (10) comprenant une toile (16) d'occultation et une partie rigide (22) solidaire d'une extrémité (24) de la toile d'occultation (16) ;
- un enrouleur (18) pour enrouler la toile d'occultation (16), l'enrouleur (18) étant monté sur la pièce de support (26) ;
- au moins une pièce (30 ; 64) de guidage en translation de ladite partie rigide (22) suivant une direction d'extension (Y-Y) entre une position proche de l'enrouleur (18) correspondant à une configuration rétractée du pare-soleil (6), une position éloignée de l'enrouleur (18) correspondant à une configuration déployée du pare-soleil (6), et une pluralité de positions intermédiaires,
**caractérisé en ce que** ladite pièce de guidage (30 ; 64) est montée mobile en rotation par rapport à la pièce de support (26) entre une position rétractée, correspondant à la configuration rétractée du pare-soleil (6), et une position déployée correspondant à la configuration déployée du pare-soleil (6), ladite pièce de guidage (30) présentant une surface de suiveur de came (40) agencée pour coopérer avec une surface de came (42) prévue sur la partie rigide (22) du rideau (10) et pour déplacer ainsi la pièce de guidage (30 ; 64) de la position rétractée vers et jusqu'à la position déployée par déplacement de la partie rigide (22) du rideau (10) de ladite position proche vers et jusqu'à ladite position éloignée de l'enrouleur (18).

2. Pare-soleil (6) extensible selon la revendication 1, comprenant des moyens de sollicitation élastique de la pièce de guidage (30 ; 64) de la position déployée vers et jusqu'à la position rétractée.

3. Pare-soleil (6) extensible selon la revendication 1 ou 2, dans lequel la pièce de guidage (30 ; 64) est une glissière (30) à l'intérieur de laquelle coulisse la partie rigide (22).

4. Pare-soleil (2) extensible selon la revendication 1 ou 2, dans lequel la pièce de guidage (30) est une barre (64) autour de laquelle coulisse la partie rigide (24).

5. Pare-soleil (6) extensible selon la revendication 4, dans lequel la barre (64) présente une fente (68) de réception de la toile d'occultation (16).

6. Pare-soleil (6) extensible selon l'une quelconque des revendications précédente, dans lequel la surface de came (40) de la partie rigide (22) est formée par le bord d'extrémité libre de la partie rigide (22).

7. Pare-soleil (6) extensible selon l'une quelconque des revendications précédentes, dans lequel la surface de came (42) et la surface de suiveur de came (40) sont conformées de telle sorte que la zone de contact entre les deux surfaces (40, 42) soit située au niveau de l'extrémité libre de la pièce de guidage (30).

8. Pare-soleil (6) extensible selon l'une quelconque des revendications précédentes, dans lequel la partie rigide (22) et la pièce de guidage (30 ; 64) présentent des reliefs complémentaires (46, 48) de retenue de la partie rigide (22) dans la position éloignée et/ou dans des positions intermédiaires et/ou dans la position proche, lesdits reliefs comprenant de préférence au moins un téton (46) de retenue pénétrant un orifice (48) correspondant de l'autre de la partie rigide (22) et de la pièce de guidage (30).

9. Pare-soleil (6) extensible selon l'une quelconque des revendications précédentes, dans lequel la pièce de guidage (30 ; 64) est montée rotative par rapport à la pièce de support (26) autour d'un axe (X'-X') parallèle à l'axe (X-X) de l'enrouleur (18) pour orienter le rideau (10).

10. Pare-soleil (6) extensible selon l'une quelconque des revendications précédentes, dans lequel le pare-soleil (6) comprend une broche de support (34) de la pièce de guidage (30 ; 64) sur laquelle la pièce de guidage (30 ; 64) est montée rotative entre la position rétractée et la position déployée.

11. Véhicule automobile comprenant une pièce (54) de structure de toit et une pièce (56) d'habillage couvrant la pièce de structure (54), ainsi qu'un pare-soleil (6), **caractérisé en ce que** le pare-soleil (6) est selon l'une quelconque des revendications précédentes, la pièce de support (26) du pare-soleil (6) étant montée solidaire de la pièce de structure (54) et masquée par la pièce d'habillage (56).
